# EUROPÄISCHE PATENTSCHRIFT

(11) **EP 1 991 030 B1**
(45) Veröffentlichungstag und Bekanntmachung des Hinweises auf die Patenterteilung: **30.08.2017**
(21) Anmeldenummer: 08103778.0
(22) Anmeldetag: 30.04.2008
(51) Int. Cl.: H05B 6/12, H05B 6/36

(54) **Induktionskochfeld und Rückschlusselement für ein Induktionskochfeld**
Induction hob and inference element for an induction hob
Champ de cuisson à induction et élément de reflux pour un champ de cuisson à induction

(30) Priorität: 09.05.2007 ES 200701386
(43) Veröffentlichungstag der Anmeldung: 12.11.2008
(73) Patentinhaber: BSH Hausgeräte GmbH, 81739 München (DE)
(72) Erfinder: Acero Acero, Jesus, 50002, Zaragoza (ES); Alonso Esteban, Rafael, 22004, Zaragoza (ES); Braulio Martinez, Ruben, 50012, Zaragoza (ES); Hernandez Blasco, Pablo Jesus, 50017, Zaragoza (ES)

(56) Entgegenhaltungen:
- EP-A2- 1 560 462
- DE-A1- 3 731 762
- JP-A- 2007 328 917

## Beschreibung

Die Erfindung geht aus von einem Induktionskochfeld nach dem Oberbegriff des Anspruchs 1 und von einem Rückschlusselement für ein Induktionskochfeld nach dem Oberbegriff des Anspruchs 11.

Aus der EP 1 560 462 A2 ist Induktionskochfeld mit wenigstens einem unter einer Heizzone angeordneten Induktor mit sechs bezüglich der Heizzone jeweils in einer radialen Richtung angeordneten und ausgerichteten Rückschlusselementen aus Ferrit bekannt. Die Rückschlusselemente dienen dem konzentrierten Rückführen der Feldlinien eines von dem Induktor erzeugten Magnetfelds. Die Rückschlusselemente sind jeweils rechteckig und weisen zwei seitliche Konturlinien auf, die die Längskanten des Rechtecks bilden. Die seitlichen Konturlinien verbinden ein von einer kurzen Kante des Rechtecks gebildetes radial inneres Ende des Rückschlusselements mit einem ein von der zweiten kurzen Kante des Rechtecks gebildeten radial äußeren Ende des Rückschlusselements. Aus der DE 3731762 A1 ist ein solches Induktionskochfeld mit trapezförmigen Rückschlusselementen bekannt.

Die Aufgabe der Erfindung besteht insbesondere darin, ein gattungsgemäßes Induktionskochfeld bereitzustellen, das eine optimierte Kopplung des Induktors mit Töpfen von unterschiedlicher Größe, insbesondere mit sehr kleinen Töpren, erlaubt.

Die Aufgabe wird erfindungsgemäß durch die Merkmale der unabhängigen Patentansprüche gelöst, während vorteilhafte Ausgestaltungen und Weiterbildungen der Erfindung den Unteransprüchen entnommen werden können.

Die Erfindung geht aus von einem Induktionskochfeld mit wenigstens einem unter einer Heizzone angeordneten Induktor und einem bezüglich der Heizzone in einer radialen Richtung angeordneten und ausgerichteten Rückschlusselement aus einem Material mit einer hohen magnetischen Permeabilität zum konzentrierten Rückführen der Feldlinien eines von dem Induktor erzeugten Magnetfelds, wobei das Rückschlusselement zwei seitliche Konturlinien aufweist, die ein radial inneres Ende des Rückschlusselements mit einem radial äußeren Ende des Rückschlusselements verbinden.

Es wird vorgeschlagen, dass wenigstens eine der seitlichen Konturlinien des Rückschlusselements einen über eine radiale Erstreckung des Rückschlusselements veränderlichen Winkel mit der radialen Richtung einschließt. Während die bekannten Formen der Rückschlusselemente hauptsächlich durch fertigungstechnische Überlegungen bestimmt sind, kann durch den über die radiale Erstreckung veränderlichen Winkel die Form des Rückschlusselements in Hinblick auf eine verbesserte Kopplung des Induktors mit dem auf die Heizzone aufgestellten Kochgeschirr erreicht werden.

Insbesondere im Vergleich zu rechteckigen Rückschlusselementen kann eine Fläche bzw. ein Volumen der Rückschlusselemente in einem bestimmten radialen Bereich vergrößert werden, ohne den für die Stromzufuhr nötigen Bauraum in einem radial inneren Bereich des Induktors zu verlieren. Der Flächenanteil, den die Rückschlusselemente im radial inneren Bereich einnehmen, kann im Vergleich zu allen bekannten Lösungen deutlich verbessert werden.

Hier und im Folgenden beziehen sich Richtungsangaben wie "radial" oder "in Umfangsrichtung" auf das geometrische Zentrum der Heizzone bzw. des Induktors. Richtungsangaben wie "oben" und "unten" beziehen sich auf eine Einbaukonfiguration des Induktionskochfelds, in welchem eine Kochfeldfläche, die zum Aufstellen des Kochgeschirrs vorgesehen ist, horizontal ausgerichtet ist.

In einer Weiterbildung der Erfindung wird vorgeschlagen, dass die wenigstens eine seitliche Konturlinie in wenigstens einem Punkt einen Winkel bildet. Dadurch kann die Form so gewählt werden, dass sie fertigungstechnisch durch gerade Schnitte herstellbar ist und aufwändige, stetig differenzierbare Kurvenformen können vermieden werden.

Wenn wenigstens eine der seitlichen Konturlinien des Rückschlusselements zumindest einen konvexen Teilbereich hat, können die Magnetfeldlinien in dem Rückschlusselement effektiv gebündelt werden. Als konvexer Teilbereich einer Konturlinie soll in diesem Zusammenhang ein Bereich bezeichnet werden, in welchem sich die von der Konturlinie begrenzte Form konvex nach außen wölbt bzw. in dem eine Verbindungslinie zwischen je zwei Punkten im Inneren der Form enthalten ist.

Die Kopplung des Induktors an kleinere Kochtöpfe bzw. Kochgeschirrelemente kann verbessert werden, wenn die Form des Rückschlusselements sich in einem radial inneren Bereich in einer Draufsicht konisch verjüngt. Die Verbesserung ist dadurch bedingt, dass sich die verjüngenden Rückschlusselemente aufgrund der sich verjüngenden Form im Vergleich zu einem rechteckigen Rückschlusselement mit gleicher Fläche radial weiter nach Innen erstrecken können und im Vergleich zu einem trapezförmigen Rückschlusselement mit gleicher Fläche in einem radial inneren Bereich breiter sein können.

In einer fertigungstechnisch besonders einfachen Ausgestaltung der Erfindung wird vorgeschlagen, dass die Form des Rückschlusselements im Wesentlichen rechteckig ist, wobei die Längsachse des Rechtecks radial verläuft und wobei die radial inneren Ecken des Rechtecks abgeschrägt sind bzw. mit einer Fase ausgestattet sind.

Ein gezieltes Ein- oder Auskoppeln von Magnetfeldlinien in einem bestimmten radialen Bereich kann dadurch bewirkt werden, dass in dem entsprechenden Bereich wenigstens eine der seitlichen Konturlinien eine Stufe aufweist. Wenn die Konturlinie im Bereich der Stufe von radial außen nach radial innen betrachten vorspringt, so dass sich die Breite des Rückschlusselements im Bereich der Stufe sprungartig verbreitert, können durch die Stufe insbesondere Feldlinien, die durch kleinere Kochtöpfe verlaufen, in das Rückschlusselement aufgenommen werden, so dass sich eine magnetische Kopplung mit kleineren Kochtöpfen verbessern lässt.

Auch unkonventionell geformte Rückschlusselemente können sicher und einfach durch ein entsprechend angepasstes Halteelement mit einem Aufnahmebereich zum Aufnehmen des Rückschlusselements montiert werden.

Eine einfache Fertigung kann erreicht werden, wenn die seitlichen Konturlinien bezüglich der radialen Richtung symmetrisch sind.

Wenn das Induktionskochfeld zumindest ein Paar von in Umfangsrichtung nebeneinander angeordneten Rückschlusselementen umfasst, wobei die seitlichen Konturlinien der nebeneinander angeordneten Rückschlusselemente zumindest in einem radial inneren Bereich parallel verlaufen, kann in diesem Bereich eine weitgehende Flächenabdeckung durch die Rückschlusselemente erreicht werden.

Wenn die in dem radial inneren Bereich parallel verlaufenden seitlichen Konturlinien einen Abstand aufweisen, der hinreichend zum Durchführen einer Stromversorgungsleitung für den Induktor ist, wird die Durchführung der Stromversorgungsleitung durch die Rückschlusselemente nicht gestört.

Der Rückschluss wird insbesondre dann deutlich verbessert und eine Streuung des Magnetfelds kann stark reduziert werden, wenn eine Permeabilität des Materials des Rückschlusselements wenigstens 20, besser jedoch wenigstens 100 beträgt. Als Material kommen zusammengesetzte Materialien mit einer Kunststoffmatrix und ferromagnetischen Partikeln, beispielsweise Ferritpartikeln oder weichmagnetische Materialien in Betracht.

Ein besonders effektiver Rückschluss kann jedoch erreicht werden, wenn das Material mit der hohen magnetischen Permeabilität Ferrit ist, dessen magnetische Permeabilitätszahl beispielsweise 100, im Idealfall bis zu 15.000 betragen kann.

Ferner betrifft die Erfindung Rückschlusselement für ein Induktionskochfeld der oben beschriebenen Art, wobei das Rückschlusselement zwei seitliche Konturlinien aufweist, die ein radial inneres Ende des Rückschlusselements mit einem radial äußeren Ende des Rückschlusselements verbinden.

Um eine optimierte Form des Rückschlusselements zu ermöglichen, wird vorgeschlagen, dass wenigstens eine der seitlichen Konturlinien einen über eine radiale Erstreckung des Rückschlusselements veränderlichen Winkel mit der radialen Richtung einschließt. Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein Induktionskochfeld mit insgesamt vier unter jeweils einer Heizzone angeordneten Induktoren,
- Fig. 2: einen der Induktoren aus Figur 1 in einer Schnittdarstellung
- Fig. 3: eine Anordnung der Rückschlusselemente in einem Träger,
- Fig. 4: eines der Rückschlusselemente aus Figur 3 in einer Einzeldarstellung und
- Fig. 5a - 5e: jeweils ein Rückschlusselement mit einer anderen Form nach alternativen Ausgestaltungen der Erfindung.

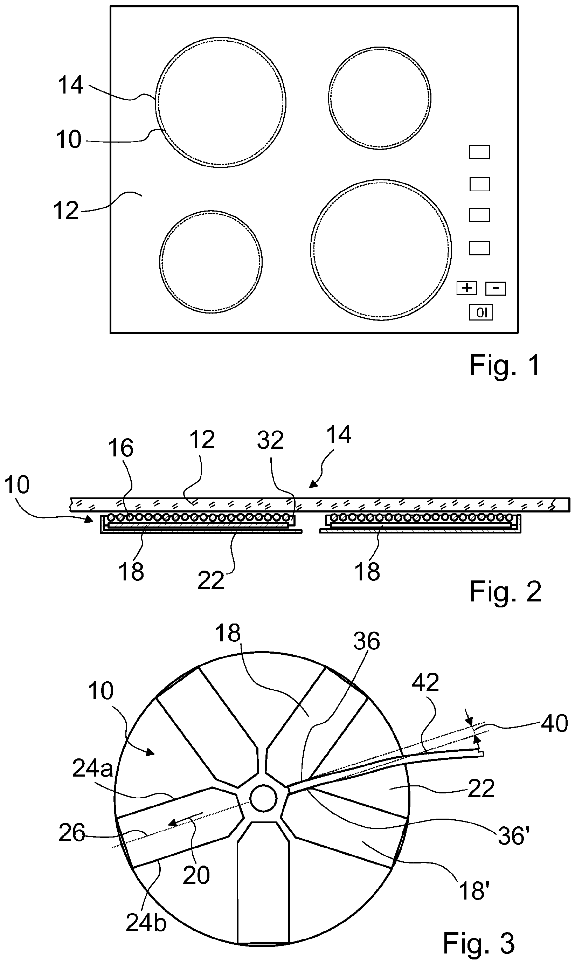

Figur 1 zeigt ein Induktionskochfeld mit insgesamt vier unter jeweils einer Heizzone 14 angeordneten Induktoren 10. Die Induktoren 10 sind durch eine Kochfeldplatte 12 aus Glas abgedeckt, die von ihrer Unterseite bedruckt ist, um die Heizzonen 14 zu visualisieren.

Figur 2 zeigt einen der Induktoren 10 aus Figur 1 in einer Schnittdarstellung. Der Induktor 10 umfasst eine Induktionsspule 16 zum erzeugen eines Magnetfelds und ist unter der Kochfeldplatte 12 angeordnet. Unterhalb des Induktors 10 sind Rückschlusselemente 18 aus einem Material mit einer hohen magnetischen Permeabilität zum konzentrierten Rückführen der Feldlinien eines von dem Induktor 10 erzeugten Magnetfelds angeordnet.

Die Rückschlusselemente 18 haben eine längliche, im Folgenden näher beschriebene Form und sind in einer bezogen auf eine vertikale Symmetrieachse der Heizzone 14 radialen Richtung 20 angeordnet und ausgerichtet. Das von dem Induktor 10 erzeugte Magnetfeld bzw. dessen Feldlinien dringen von unten in den Boden eines auf der Heizzone 14 aufgestellten Kochgeschirrelements ein, verlaufen in diesem radial nach außen und werden durch die Rückschlusselemente 18 konzentriert und in das Zentrum des Induktors 10 zurückgeführt. Die Rückschlusselemente 18 und die Induktionsspule 16 sind in einem Träger 22 gehalten, der auch die gesamte Induktoranordnung nach unten abschirmt.

Figur 3 zeigt eine Anordnung der Rückschlusselemente 18 in dem Träger 22. Jedes der Rückschlusselemente 18 weist zwei seitliche Konturlinien 24a, 24b auf, die ein von einer geraden, senkrecht zu einer Mittelachse 26 des Rückschlusselements 18 verlaufenden Innenkante 28 gebildetes radial inneres Ende des Rückschlusselements 18 mit einem radial äußeren Ende des Rückschlusselements 18 verbinden. Das radial äußere Ende ist eine ebenfalls gerade, senkrecht zu einer Mittelachse 26 des Rückschlusselements 18 verlaufende Außenkante 30. In dem Träger 22 sind die Rückschlusselemente 18 und die Induktionsspule 16 über ein Halteelement 32 mit einem an die Form der Rückschlusselemente 18 angepassten Aufnahmebereich zum Aufnehmen jeweils eines Rückschlusselements 18 verbunden.

Die Rückschlusselemente 18 können in das Halteelement 32 eingerastet sein oder mit diesem verklebt sein. Das Halteelement 32 kann mit dem Träger 22 verschraubt, verklebt oder in einer anderen, dem Fachmann als sinnvoll erscheinenden Weise verbunden sein.

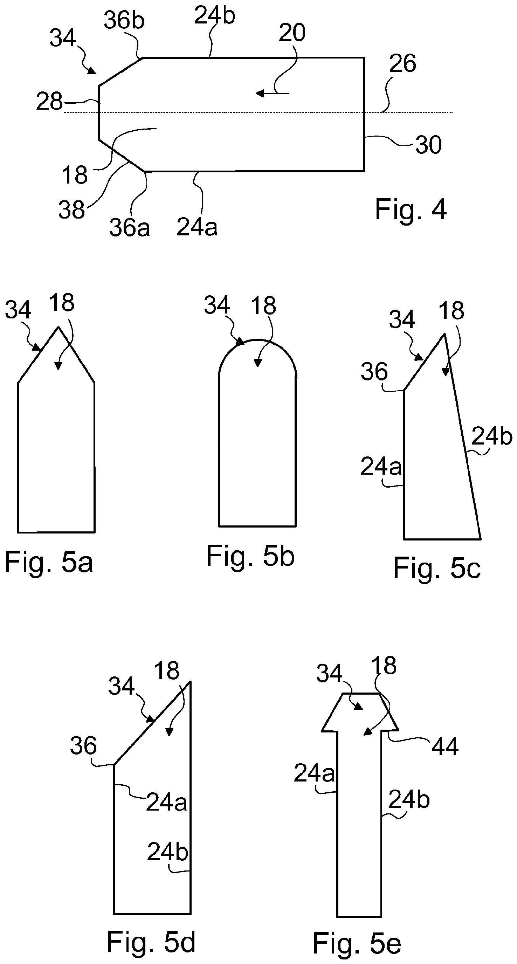

Figur 4 zeigt eines der Rückschlusselemente 18 in einer Einzeldarstellung. Die seitlichen Konturlinien 24a, 24b des Rückschlusselements 18 schließen einen über eine radiale Erstreckung des Rückschlusselements 18 veränderlichen Winkel mit der radialen Richtung 20 bzw. der Mittelachse 26 des Rückschlusselements 18 ein und sind jeweils konvex bzw. begrenzen das Rückschlusselement 18 derart, dass dieses in einer Draufsicht eine konvexe Form hat. Die Form des Rückschlusselements 18 verjüngt sich in einem radial inneren Bereich 34 in einer Draufsicht konisch, da die seitlichen Konturlinien 24a, 24b jeweils in einem Punkt 36a, 36b einen Winkel bilden.

Die Form des Rückschlusselements 18 ist im Wesentlichen rechteckig, wobei die Längsachse des Rechtecks radial verläuft und wobei die radial inneren Ecken des Rechtecks in einer am dem Punkt 36a, 36b in dem Winkel schräg nach innen verlaufenden Schräge 38 abgeschrägt sind bzw. mit einer Fase versehen sind.

Die seitlichen Konturlinien 24a, 24b der Rückschlusselemente 18 sind bezüglich der radialen Richtung 20 bzw. bezüglich der Mittelachse 26 des Rückschlusselements 18 symmetrisch. Die Rückschlusselemente 18 sind formgleich und in ihren durch das Halteelement 32 vorgegebenen Montagepositionen isotrop über den Umfang des Trägers 22 bzw. der Heizzone 14 verteilt angeordnet, und zwar derart, dass die Mittelachse 26 der Rückschlusselemente 18 jeweils radial ausgerichtet ist.

Die Permeabilitätszahl des Materials der Rückschlusselemente 18 beträgt beispielsweise 100, da das Material mit der hohen magnetischen Permeabilität Ferrit ist. In alternativen Ausgestaltungen der Erfindung können andere ferromagnetische Materialien oder zusammengesetzte Materialien - beispielsweise Kunststoffe oder Keramiken mit Ferritpartikeln - gewählt werden.

Wieder Bezug nehmend auf Figur 3 ist erkennbar, dass die paarweise in Umfangsrichtung nebeneinander angeordneten Rückschlusselemente 18, 18' so angeordnet sind dass die seitlichen Konturlinien 24a, 24b der nebeneinander angeordneten Rückschlusselemente 18, 18' zumindest in dem radial inneren, von den Schrägen 38, 38' gebildeten Bereich 34 parallel verlaufen.

Dabei weisen die Schrägen 38, 38' der benachbarten Konturlinien der benachbarten Rückschlusselemente 18, 18' einen Abstand 40 auf, der hinreichend zum Durchführen einer Stromversorgungsleitung 42 für den Induktor 10 ist.

Die Rückschlusselemente 18 für das oben beschriebene Induktionskochfeld können wegen der aus geraden Linien zusammengesetzten seitlichen Konturlinien 24a, 24b einfach aus dem Ferritmaterial herausgeschnitten werden. Beispielsweise können bei der Herstellung zunächst rechteckige Platten aus dem Ferritmaterial herausgeschnitten werden und anschließend die vorderen Ecken entfernt werden. In alternativen Ausgestaltungen der Erfindung könnte das Rückschlusselement 18 auch aus einem rechteckigen hinteren Teil und einem trapezförmigen vorderen Teil gebildet werden, wobei letzteres Teil den konisch zusammenlaufenden Bereichs 34 bildet.

Figuren 5a - 5e zeigen alternative Formen eines Rückschlusselements 18 eines erfindungsgemäßen Induktionskochfelds. Die folgende Beschreibung beschränkt sich im Wesentlichen auf Unterschiede zu dem im Zusammenhang mit den Figuren 1 - 4 beschriebenen Ausführungsbeispiel, wobei im Hinblick auf gleich bleibende Merkmale auf die Beschreibung zu den Figuren 1 - 4 verwiesen wird.

Das Rückschlusselement 18 in Figur 5a läuft an seiner Vorderseite bzw. an seinem radial inneren Ende in einer Spitze zusammen, das Rückschlusselement 18 aus Figur 5b ist an seinem radial inneren Ende abgerundet. In dem in Figur 5c dargestellten Rückschlusselement 18 ist nur eine der seitlichen Konturlinien 24a durch einen Winkel konvex geformt, während die zweite seitliche Konturlinie gerade verläuft.

Figur 5d zeigt ein Rückschlusselement 18 mit zwei im Wesentlichen parallel verlaufenden seitlichen Konturlinien 24a, 24b, wobei eine linke seitliche Konturlinie in einem Punkt 36a radial innen abknickt und in einer Schräge 38 bis zur rechten seitlichen Konturlinie verläuft.

Figur 5e zeigt ein Rückschlusselement 18 mit einer Form, in welcher die beiden seitlichen Konturlinien 24a, 24b in einem radial äußeren Bereich parallel verlaufen, dann in jeweils einer Stufe 44 senkrecht nach außen vorspringen und dann konisch zusammenlaufen. Dadurch ist ein radial innerer Bereich 34 des Rückschlusselements 18 breiter als der radial äußere Bereich, so dass eine Kopplung des Induktors 10 an Kochtöpfe, deren Radius kleiner ist als der Radius, an dem die Stufen 44 angeordnet sind, verbessert wird.

Bezugszeichen
- 10: Induktor
- 12: Kochfeldplatte
- 14: Heizzone
- 16: Induktionsspule
- 18: Rückschlusselement
- 20: Richtung
- 22: Träger
- 24a: Konturlinie
- 24b: Konturlinie
- 26: Mittelachse
- 28: Innenkante
- 30: Außenkante
- 32: Halteelement
- 34: Bereich
- 36: Punkt
- 38: Schräge
- 40: Abstand
- 42: Stromversorgungsleitung
- 44: Stufe

## Patentansprüche

1. Induktionskochfeld mit wenigstens einem unter einer Heizzone (14) angeordneten Induktor (10) und einem bezüglich der Heizzone (14) in einer radialen Richtung (20) angeordneten und ausgerichteten Rückschlusselement (18) aus einem Material mit einer hohen magnetischen Permeabilität zum konzentrierten Rückführen der Feldlinien eines von dem Induktor (10) erzeugten Magnetfelds, wobei das Rückschlusselement (18) zwei seitliche Konturlinien (24a, 24b) aufweist, die ein radial inneres Ende des Rückschlusselements (18) mit einem radial äußeren Ende des Rückschlusselements (18) verbinden, **dadurch gekennzeichnet, dass** wenigstens eine der seitlichen Konturlinien (24a, 24b) des Rückschlusselements (18) einen über eine radiale Erstreckung des Rückschlusselements (18) veränderlichen Winkel mit der radialen Richtung (20) einschließt.

2. Induktionskochfeld nach einem der vorhergehenden Ansprüche, **dadurch gekennzeichnet, dass** die wenigstens eine seitliche Konturlinie in wenigstens einem Punkt (36a, 36b) einen Winkel bildet.

3. Induktionskochfeld nach einem der vorhergehenden Ansprüche, **dadurch gekennzeichnet, dass** wenigstens eine der seitlichen Konturlinien (24a, 24b) des Rückschlusselements (18) zumindest einen konvex nach außen gewölbten Teilbereich hat.

4. Induktionskochfeld nach einem der vorhergehenden Ansprüche, **dadurch gekennzeichnet, dass** die Form des Rückschlusselements (18) sich in einem radial inneren Bereich (34) in einer Draufsicht konisch verjüngt.

5. Induktionskochfeld nach einem der vorhergehenden Ansprüche, **dadurch gekennzeichnet, dass** die Form des Rückschlusselements (18) im Wesentlichen rechteckig ist, wobei die Längsachse des Rechtecks radial verläuft und wobei die radial inneren Ecken des Rechtecks abgeschrägt sind.

6. Induktionskochfeld nach einem der vorhergehenden Ansprüche, **dadurch gekennzeichnet, dass** wenigstens eine der seitlichen Konturlinien (24a, 24b) eine Stufe (44) aufweist.

7. Induktionskochfeld nach einem der vorhergehenden Ansprüche, **gekennzeichnet durch** ein Halteelement (32) mit einem Aufnahmebereich zum Aufnehmen des Rückschlusselements (18).

8. Induktionskochfeld nach einem der vorhergehenden Ansprüche, **dadurch gekennzeichnet, dass** die seitlichen Konturlinien (24a, 24b) bezüglich der radialen Richtung (20) symmetrisch sind.

9. Induktionskochfeld nach einem der vorhergehenden Ansprüche, **gekennzeichnet durch** zumindest ein Paar von in Umfangsrichtung nebeneinander angeordneten Rückschlusselementen (18), wobei die seitlichen Konturlinien (24a, 24b) der nebeneinander angeordneten Rückschlusselemente (18) zumindest in einem radial inneren Bereich (34) parallel verlaufen.

10. Induktionskochfeld nach einem der vorhergehenden Ansprüche, **dadurch gekennzeichnet, dass** die in dem radial inneren Bereich (34) parallel verlaufenden seitlichen Konturlinien (24a, 24b) einen Abstand aufweisen, der hinreichend zum Durchführen einer Stromversorgungsleitung (42) für den Induktor (10) ist.

11. Rückschlusselement (18) für ein Induktionskochfeld nach einem der vorhergehenden Ansprüche, wobei das Rückschlusselement (18) zwei seitliche Konturlinien (24a, 24b) aufweist, die ein radial inneres Ende des Rückschlusselements (18) mit einem radial äußeren Ende des Rückschlusselements (18) verbinden, **dadurch gekennzeichnet, dass** wenigstens eine der seitlichen Konturlinien (24a, 24b) einen über eine radiale Erstreckung des Rückschlusselements (18) veränderlichen Winkel mit der radialen Richtung (20) einschließt.

## Claims

1. Induction hob with at least one inductor (10) arranged below a heating zone (14) and a return element (18) arranged and aligned in a radial direction (20) with respect to the heating zone (14), which return element (18) is made of a material with a high magnetic permeability for concentrically feeding back the field lines of a magnetic field generated by the inductor (10), wherein the return element (18) has two lateral contour lines (24a, 24b), which connect a radially inner end of the return element (18) to a radially outer end of the return element (18), **characterised in that** at least one of the lateral contour lines (24a, 24b) of the return element (18) includes an angle to the radial direction (20) which is variable over a radial extension of the return element (18).

2. Induction hob according to one of the preceding claims, **characterised in that** the at least one lateral contour line forms an angle at at least one point (36a, 36b).

3. Induction hob according to one of the preceding claims, **characterised in that** at least one of the lateral contour lines (24a, 24b) of the return element (18) has at least one subregion which arches outwards convexly.

4. Induction hob according to one of the preceding claims, **characterised in that** the shape of the return element (18) tapers conically in a radially inner region (34) when viewed from above.

5. Induction hob according to one of the preceding claims, **characterised in that** the shape of the return element (18) is essentially rectangular, wherein the longitudinal axis of the rectangle runs radially and wherein the radially inner corners of the rectangle are slanted.

6. Induction hob according to one of the preceding claims, **characterised in that** at least one of the lateral contour lines (24a, 24b) has a step (44).

7. Induction hob according to one of the preceding claims, **characterised by** a retaining element (32) with a receiving region for receiving the return element (18).

8. Induction hob according to one of the preceding claims, **characterised in that** the lateral contour lines (24a, 24b) are symmetrical with respect to the radial direction (20).

9. Induction hob according to one of the preceding claims, **characterised by** at least one pair of return elements (18) arranged next to one another in the circumferential direction, wherein the lateral contour lines (24a, 24b) of the return elements (18) arranged next to one another run in parallel at least in a radially inner region (34).

10. Induction hob according to one of the preceding claims, **characterised in that** the lateral contour lines (24a, 24b) running in parallel in the radially inner region (34) have a spacing which is sufficient for passing through a power supply line (42) for the inductor (10).

11. Return element (18) for an induction hob according to one of the preceding claims, wherein the return element (18) has two lateral contour lines (24a, 24b), which connect a radially inner end of the return element (18) to a radially outer end of the return element (18), **characterised in that** at least one of the lateral contour lines (24a, 24b) includes an angle to the radial direction (20) which is variable over a radial extension of the return element (18).

## Revendications

1. Champ de cuisson par induction avec au moins un inducteur (10) disposé au-dessous d'une zone de chauffage (14) et un élément de culasse de reflux (18) disposé et orienté dans une direction radiale (20) par rapport à la zone de chauffage (14), en un matériau à haute perméabilité magnétique pour la recirculation concentrée des lignes de champ d'un champ magnétique engendré par l'inducteur (10), dans lequel l'élément de culasse de reflux (18) comprend deux lignes de contour latérales (24a, 24b) qui relient une extrémité radialement interne de l'élément de culasse de reflux (18) à une extrémité radialement externe de l'élément de culasse de reflux (18), **caractérisé en ce qu'**au moins l'une des lignes de contour latérales (24a, 24b) de l'élément de culasse de reflux (18) englobe, avec la direction radiale (20), un angle variable selon une étendue radiale de l'élément de culasse de reflux (18).

2. Champ de cuisson par induction selon l'une des revendications précédentes, **caractérisé en ce que** l'au moins une ligne de contour latérale forme un angle en au moins un point (36a, 36b).

3. Champ de cuisson par induction selon l'une des revendications précédentes, **caractérisé en ce qu'**au moins l'une des lignes de contour latérales (24a, 24b) de l'élément de culasse de reflux (18) présente au moins une zone partielle courbée de manière convexe vers l'extérieur.

4. Champ de cuisson par induction selon l'une des revendications précédentes, **caractérisé en ce que** la forme de l'élément de culasse de reflux (18) se rétrécit de manière conique, en vue en plan, dans une zone radialement interne (34).

5. Champ de cuisson par induction selon l'une des revendications précédentes, **caractérisé en ce que** la forme de l'élément de culasse de reflux (18) est essentiellement rectangulaire, dans lequel l'axe longitudinal du rectangle s'étend radialement et dans lequel les coins radialement internes du rectangle sont biseautés.

6. Champ de cuisson par induction selon l'une des revendications précédentes, **caractérisé en ce qu'**au moins l'une des lignes de contour latérales (24a, 24b) comprend un épaulement (44).

7. Champ de cuisson par induction selon l'une des revendications précédentes, **caractérisé par** un élément de retenue (32) avec une zone de maintien pour le maintien de l'élément de culasse de reflux (18).

8. Champ de cuisson par induction selon l'une des revendications précédentes, **caractérisé en ce que** les lignes de contour latérales (24a, 24b) sont symétriques par rapport à la direction radiale (20).

9. Champ de cuisson par induction selon l'une des revendications précédentes, **caractérisé par** au moins une paire d'éléments de culasse de reflux (18) disposés l'un à côté de l'autre en direction périphérique, dans lequel les lignes de contour latérales (24a, 24b) des éléments de culasse de reflux (18) disposés l'un à côté de l'autre s'étendent parallèlement dans au moins une zone radialement interne (34).

10. Champ de cuisson par induction selon l'une des revendications précédentes, **caractérisé en ce que** les lignes de contour latérales (24a, 24b) s'étendant parallèlement dans la zone radialement interne (34) sont à une distance mutuelle qui est suffisante pour le passage d'un conducteur d'alimentation en courant (42) pour l'inducteur (10).

11. Élément de culasse de reflux (18) pour un champ de cuisson par induction selon l'une des revendications précédentes, l'élément de culasse de reflux (18) comprenant deux lignes de contour latérales (24a, 24b) qui relient une extrémité radialement interne de l'élément de culasse de reflux (18) à une extrémité radialement externe de l'élément de culasse de reflux (18), **caractérisé en ce qu'**au moins l'une des lignes de contour latérales (24a, 24b) englobe, avec la direction radiale (20), un angle variable selon une étendue radiale de l'élément de culasse de reflux (18).
